# EUROPEAN PATENT SPECIFICATION

(11) **EP 3 467 433 B1**
(45) Date of publication and mention of the grant of the patent: **08.12.2021**
(21) Application number: 18198407.1
(22) Date of filing: 03.10.2018
(51) Int. Cl.: G01B 17/02, G05B 23/02, F17D 5/06, G06Q 50/06, G06Q 10/00

(54) **MEASURING METHOD AND ARRANGEMENT FOR MONITORING THE CONDITION OF INDUSTRIAL PIPELINES**
MESSVERFAHREN UND -ANORDNUNG ZUR ÜBERWACHUNG DES ZUSTANDS VON INDUSTRIEROHRLEITUNGEN
PROCÉDÉ DE MESURE ET AGENCEMENT POUR SURVEILLER L'ÉTAT DE CONDUITES INDUSTRIELLES

(30) Priority: 06.10.2017 FI 20175878
(43) Date of publication of application: 10.04.2019
(73) Proprietor: Bravida Finland Oy, 00380 Helsinki (FI)
(72) Inventor: JUNTTILA, Marko, 00380 Helsinki (FI); KÄHKÖNEN, Saku, 00380 Helsinki (FI)
(74) Representative: Berggren Oy

(56) References cited:
- EP-A2- 1 191 470
- US-A1- 2003 171 879
- US-A1- 2010 185 401
- US-A1- 2013 317 750
- US-A1- 2017 206 510

## Description

The invention relates to a method, a measuring arrangement and a measuring server utilized in the method for determining the timing for a need to exchange industrial pipelines.

### Prior art

In industrial manufacturing, maintenance is commonly based either on time, on periodically done monitoring measurings, on experience or on available money. Renovation need is unfortunately often only a good guess, and money is wasted either on premature exchange of apparatus parts or on belated exchange of apparatus parts. In many manufacturing facilities, maintenance is done as dictated by the calendar, by experience or by necessity.

In industrial pipelines, wear of pipes and the need to exchange them causes large costs. Liquid material passing through the pipeline either builds up in the bends of the pipes or wears the pipelines, especially in their bend points.

Various prediction measuring systems for maintenance need utilizing manually performed measurings are in use. Usually in these systems, the maintenance need measurings are done at predetermined times. If the gap between measuring times is not optimal for the process, for example due to altered process conditions, sufficiently precise information is not received with the measurings regarding when and what kind of maintenance or repair procedure is necessary for keeping the pipeline in such operating condition that the process does not need to be shut down unpredictably due to pipe failure.

It is also common that in a certain factory, a production maintenance shutdown can always be realized only during a certain calendar week, and the same parts are always exchanged in connection with the maintenance shutdown year after year. On the other hand, we know that all years are not equal. Thereby, after the performed maintenance shutdown it can sometimes be found that the exchanged "old pipes" on the scrap pallet would have been usable for at least another year. Unnecessary pipe exchange done in this way has caused unnecessary waste costs. Publication US2003171879 A1 shows a method and a system for estimating the operational reliability and maintenance need of a pipeline.

Document US 2017/0206510 A1 discloses methods and apparatus for inspecting, maintaining, repairing and replacing infrastructures assets and document US 2010/0185401 A1 discloses a computer system and method for predicting corrosion rates of a pipe.

### Objects of the invention

It is an object of the invention to present a new condition monitoring method and condition monitoring arrangement for implementing condition monitoring of industrial pipelines, which can significantly reduce drawbacks, disadvantages and costs related to prior art condition monitoring methods and systems for industrial pipelines.

The objects of the invention are obtained with an online condition monitoring system and condition monitoring method, which utilize pipe wall thickness measured continuously or at predetermined times by ultrasound sensors measuring wear of the pipelines of an industrial facility. Based on the current wall thickness of the pipe, an estimation is calculated for the point in time, when exchanging the pipe is necessary with the process utilization rate according to the measuring moment. With the condition monitoring method according to the invention, unpredicted pipeline leaks and also unnecessary pipe exchanges done in industrial pipelines in connection with maintenance shutdowns are prevented.

An advantage of the invention is that no unexpected shutdowns are caused in an industrial facility due to unpredicted wearing through of the pipes.

An additional advantage of the invention is that unnecessary shutdowns and pipe exchanges do not need to be done.

An additional advantage of the invention is that the methodical approach to maintenance of the industrial pipelines is based on current measuring data, whereby shutdowns included in the maintenance plans can be timed in an optimal way with regards to maintenance costs.

An additional advantage of the invention is that current information is received regarding the durability of different materials used in industrial pipelines at different points in the process, with different mediums, in varying temperatures and pressures. This measuring data can be utilized when selecting pipe materials and when determining pipe dimensions when planning a pipe exchange.

An additional advantage of the invention is that prediction of the maintenance need of industrial pipelines can be planned so that the total costs caused by an interruption of the manufacturing process can be minimized.

It is a further advantage of the invention that the material selection and dimensioning of new industrial pipelines can be done based on the collected measuring data for each industrial facility or process.

The method according to the invention for determining the timing of the need to exchange a pipe in an industrial pipeline is characterized in that
- a measuring device sends a measuring result regarding the wall thickness of a pipe to a gateway, the sending of which result simultaneously starts a measuring delay, after the expiry of which the measuring device performs the next measuring of a pipe's wall thickness
- the gateway sends the measuring result regarding the wall thickness of the pipe to a measuring server
- the measuring server receives and stores the measuring result of the pipe wall thickness and that
- the measuring server determines if the measuring result of the wall thickness is smaller than a pre-set alarm thickness for the pipe, and if
   - the measuring result of the pipe falls below the set alarm thickness, the measuring server sends a notification regarding the need to exchange the pipe and simultaneously stores the measured wall thickness of the pipe in a database and checks, if a suggestion for the material and dimensions of a replacement pipe is made in connection with the replacement necessity of the pipe, or if
   - the measuring result of the pipe exceeds the set alarm thickness, the measuring server stores the measured wall thickness of the pipe in the database.

The measuring arrangement according to the invention for the timing of the need to exchange a pipe in an industrial pipeline comprises a measuring server and a measuring device for the wall thickness of a pipe, which measuring device is arranged to measure the wall thickness of the pipe, whereby the measuring arrangement further comprises
- a gateway, to which the measuring device of the pipe wall thickness is arranged to send a measuring result regarding the wall thickness of a pipe, the sending of which result is simultaneously arranged to start a measuring delay, after the expiry of which the measuring device is arranged to perform the next measuring of a pipe's wall thickness
- the gateway is arranged to send the measuring result regarding the wall thickness of the pipe to the measuring server
- the measuring server is arranged to receive and store the measuring result of the pipe wall thickness and that
- the measuring server is arranged to determine if the measuring result of the pipe
wall thickness is smaller than a pre-set alarm thickness for the pipe, and if
- the measuring result of the pipe falls below the set alarm thickness, the measuring server is arranged to send a notification regarding the need to exchange the pipe and simultaneously store the measured wall thickness of the pipe in a database and check, if a suggestion for the material and dimensions of a replacement pipe is made in connection with the replacement necessity of the pipe, or if
- the measuring result of the pipe exceeds the set alarm thickness, the measuring server is arranged to store the measured wall thickness of the pipe in the database.

The measuring server according to the invention for determining the timing for a need to exchange a pipe of an industrial pipeline is characterized in that the measuring server comprises means for determining if the measuring result of a pipe wall thickness is smaller than a pre-set alarm thickness for the pipe, and if
- the measuring result of the pipe falls below the set alarm thickness for the pipe, the measuring server additionally comprises means for sending a notification regarding the need to exchange the pipe and simultaneously storing the measured wall thickness of the pipe in a database and checking, if a suggestion for the material and dimensions of a replacement pipe is made in connection with the replacement necessity of the pipe, or if
- the measuring result of the pipe exceeds the set alarm thickness, the measuring server (8) comprises means for storing the measured wall thickness of the pipe in the database.

Some advantageous embodiments of the invention are presented in the dependent claims.

The basic idea of the invention is the following: In the determining method and arrangement according to the invention for the timing of the need to exchange a pipe in an industrial pipeline, the wall thickness of pipes prone to wear is measured in real-time advantageously from points, where it is known that wear of the wall thickness is a problem.

Measurings of the pipe wall thickness are advantageously performed with at least one ultrasound sensor according to the invention, which is attached to the metallic outer surface of the pipe. The measuring of the pipe wall thickness can advantageously be determined to be done at certain time intervals, the length of which depends on the manufacturing process, the material of the pipe and the substance flowing in the pipe, the pressure and temperature of the pipe. With timing of the measuring, the usage time of the battery needed for the measuring device can advantageously be extended to be so long, that the battery of the measuring device does not need to be exchanged or charged before the determined need to exchange the pipe being measured.

The measuring device sends the wall thickness of the measured pipe advantageously via a wireless data transfer connection to a data processing device functioning as a gateway of the industrial facility. The gateway device sends the measuring data of pipe wall thicknesses identified by all the measuring devices of the same industrial facility either via a wired or wireless network to some service operator's wired or wireless telecommunications network to be forwarded to a measuring server according to the invention, utilized in the estimation of the maintenance need of pipes.

The measuring server processes the received pipe wall thickness measuring results and advantageously stores them in a database it manages. Measuring data stored in the database can advantageously be utilized both for determining the maintenance timing of an industrial pipeline and for selecting the material and/or for dimensioning the mechanical outer dimensions and pipe wall thickness of a pipe to be exchanged during a maintenance shutdown.

In the following, the invention will be described in detail. In the description, reference is made to the enclosed drawings, in which
- Figure 1: shows as an example a maintenance system for an industrial pipeline according to the invention,
- Figure 2: shows as an example the functional main parts of a measuring device for pipe wall thickness according to the invention, and
- Figure 3: shows as an exemplary flow chart the main steps of a determining method for the need to exchange a pipe according to the invention.

The embodiments in the following description are given as examples. Though the description may refer to a certain embodiment or embodiments, this does not mean that the described characteristic would be usable only in one described embodiment. The individual characteristics of two or more embodiments may be combined. The scope of protection is defined in the appended claims.

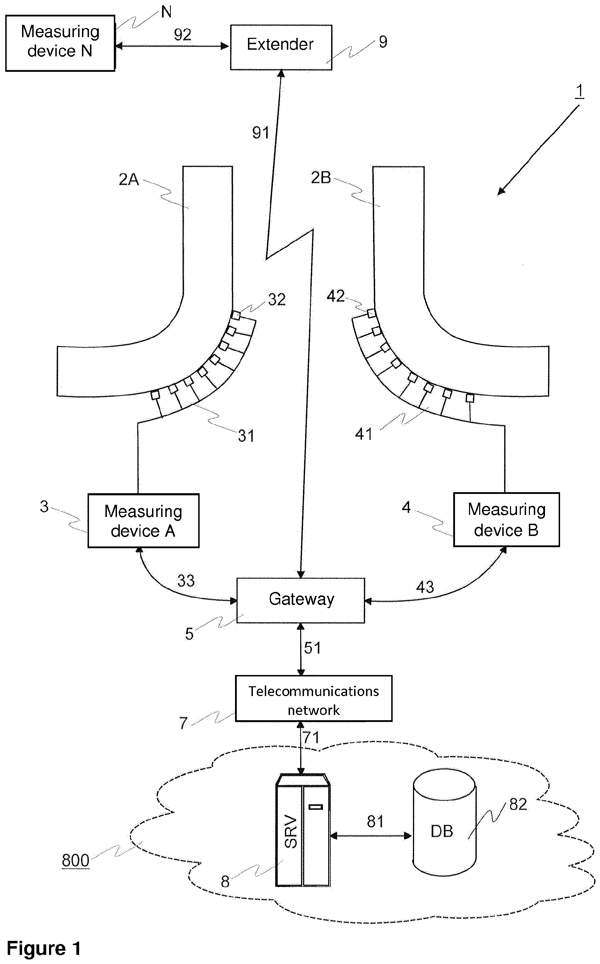

**Figure 1** shows as an example some device components and functional main parts of a determining arrangement 1 of the timing of a need to exchange a pipe according to the invention, suitable for condition monitoring of pipes belonging to an industrial pipeline and for determining a need to exchange the pipes. By utilizing the measuring arrangement 1, it is possible in an industrial facility to determine the need to exchange pipes belonging to industrial pipelines and the exchange timing for each pipe.

In the example of Figure 1, the determining arrangement 1 for the timing of a need to exchange a pipe according to the invention monitors changes in the wall thickness of two exemplary pipes 2A and 2B. A measuring device for pipe wall thickness according to the invention has advantageously been connected to the outer surface of both pipes 2A and 2B. Measuring device A, reference 3, has been connected to the surface of pipe 2A, and measuring device B, reference 4, has been connected to the surface of pipe 2B. Both measuring devices 3 and 4 advantageously comprise several separate ultrasound sensors, references 32 and 42. In the advantageous embodiment shown in Figure 1, both measuring devices 3 and 4 comprise eight ultrasound sensors 32 and 42. The ultrasound sensors 32 and 42 are connected to measuring connections of the pipe wall thickness measuring devices 3 and 4, advantageously with wirings 31 and 41.

In the example of Figure 1, there is a two-way data transfer connection 33 from the measuring device 3 to a data processing device, which functions as a gateway 5 of the industrial facility. Correspondingly, there is a two-way data transfer connection 43 from the measuring device 4 to the gateway 5. The data transfer connections 33 and 43 can be either wired data transfer connections, such as an Ethernet connection, or wireless RF data transfer connections, such as ZigBee^{®} or SmartMesh IP^{™}.

The length or regional scope of the pipelines of an industrial facility can be so large that some pipe measuring devices cannot establish a direct wireless RF data transfer connection to the gateway 5, when low-power RF transmitters are utilized in the measuring devices. In the example of Figure 1, the measuring device N is such a measuring device, which is not able to establish a direct wireless data transfer connection to the gateway 5, for example because of a too long distance. In this case a data processing device can be utilized in the determining arrangement 1 for the timing of the need to exchange a pipe, which data processing device is herein below called a network extender 9. The network extender 9 can advantageously be a SmartMesh IP^{™} modem, to which the measuring device N advantageously establishes a wireless data transfer connection 92. The transmission power of the extender 9 at the used RF frequency is set to be such that it can relay the measuring result sent by the measuring device N advantageously via a wireless data transfer connection 91 to the gateway 5.

From the gateway 5 there is a data transfer connection to the Internet 51 in some network operator's telecommunications network 7. The data transfer connection 51 can either be a wired data transfer connection, such as Ethernet, or a wireless data transfer connection, such as for example a WLAN, 2G, 3G, 4G or 5G network.

In the example of Figure 1, the measuring server 8 according to the invention is also connected to the telecommunications network 7 via the data transfer connection 71. The measuring server 8 can be a server unit of some company which produces maintenance services, whereby it is according to Figure 1 connected to the gateway 9 via some telecommunications network 7. Alternatively, the measuring server 8 can be a server unit managed and owned by the industrial facility, whereby it can be connected directly to the gateway 5 in a manner that differs from the example of Figure 1.

The measuring server 8 advantageously comprises both an input unit for receiving messages from the telecommunications network 7 or from the gateway 5 and an output unit for sending messages to the telecommunications network 7 or the gateway 5. The measuring server 8 also comprises a processor, to which a data storage arrangement has been connected, such as a memory unit, in which the measuring data of the measuring devices 3, 4 and N according to the invention can be stored at least temporarily. In the memory unit has advantageously been stored also a computer program relating to the invention, which comprises code means, by running which the processor of the measuring server 8 is arranged to estimate maintenance needs for each pipe. The processor, memory, input unit and output unit are electronically connected together in a manner known by someone skilled in the art for systematic running of received and/or stored measuring data according to predetermined and essentially programmed function series.

The measuring server 8 advantageously also comprises a programmable interface or user interface, which comprises means for processing measuring data or receiving measuring commands from the measuring server's 8 administrator and sending measuring commands to the measuring devices 3, 4 and N belonging to the determining arrangement 1 for the timing of the need to exchange a pipe.

The measuring server 8 according to the invention receives measuring data regarding the pipe wall thickness sent by the measuring devices 3, 4 and N via its input unit. The measuring server 8 processes the measuring data regarding the pipe wall thickness that have come from the measuring devices 3, 4 and N with a computer program relating to the invention. The computer program can be used to estimate the point in time, when the wall thickness of a certain pipe falls below the pre-set alarm limit, the lower limit value of the wall thickness of the pipe 2A, 2B or N. Thus, the measuring server 8 advantageously generates an alarm message to the party, who manages the maintenance planning of the industrial facility in question. The measuring server 8 advantageously stores 81 both the received measuring data regarding the pipe wall thickness and the sent alarm message in the database 82 according to the invention.

Also other technical information affecting the wear of the pipe can advantageously be stored in the database 82, such as the pipe material, mechanical dimensioning of the pipe, the substance flowing in the pipe, the temperature of the pipe and the pressure prevailing in the pipe. By combining the pipe data from several industrial facilities, such as for example material, process and pipe wall thickness wear data, a so-called "Big data" database can be created. Data included in the Big data database can be utilized for the detailed planning and maintenance need estimation of already existing pipelines or pipelines being planned.

Instead of a separate measuring server 8 shown in the example of Figure 1, the processing of measuring data generated in the determining arrangement 1 for the timing of the need to exchange a pipe according to the invention can also be implemented as a cloud service 800 of some service provider offering IT services, which can be achieved on one or more servers administrated by the service provider.

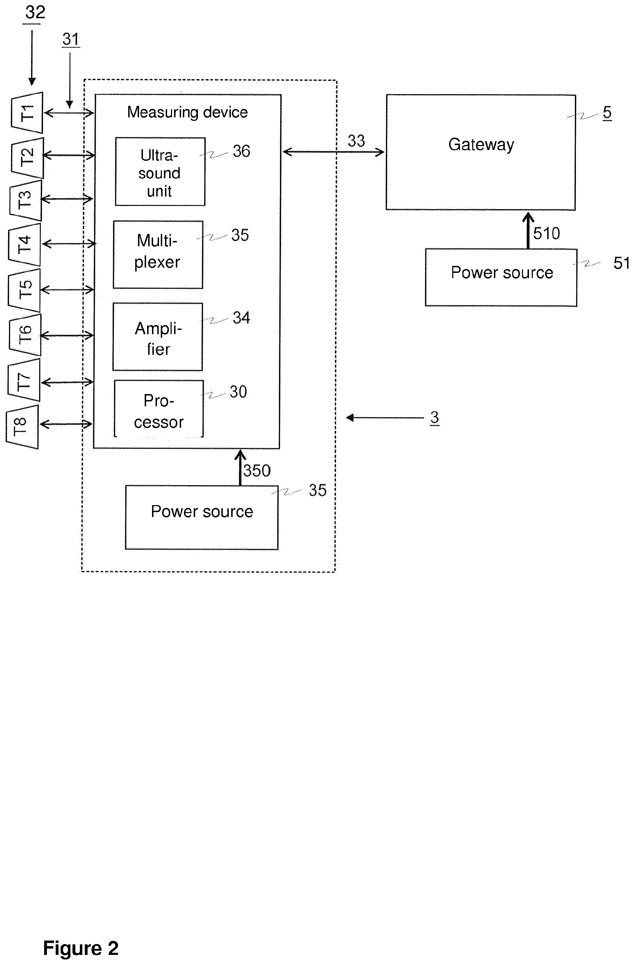

**Figure 2** shows the functional main parts of the measuring device 3 according to the invention and its connection to the gateway 5.

The measuring device 3 includes a power source 35, the at least one operating voltage 350 produced by which is utilized by the measuring device's 3 different subcomponents. The power source 35 advantageously includes a battery or an accumulator and electronic components needed for modifying the operating voltage. The capacity of the power source's 35 battery or accumulator is advantageously dimensioned so that it is sufficient for the predicted lifetime of the pipe. If the lifetime of the pipe exceeds the operating time of the battery or accumulator, the power source 35 can include an indicator element, which indicates a need to exchange the battery or a need to charge the accumulator before the operation of the measuring device 3 ends.

The measuring device 3 comprises a suitable processor 30 or a programmable logic and a therein included memory. The memory can utilise either non-volatile and/or volatile memory technology. Program commands utilized in the implementation of measuring functions utilized in measuring the wall thickness of a pipe according to the invention are advantageously stored in the memory. The processor 30 and the measuring commands stored in its memory are arranged to activate the measuring device's 3 ultrasound unit 36 into its operational state and to shut down the ultrasound unit 36 after the performed measuring.

With a measuring command sent by the measuring device's 3 processor 30, the ultrasound unit 36 in the operational state can generate an ultrasound pulse, which is advantageously sent to some ultrasound sensor 32 connected to the measuring device 3, which ultrasound sensors there are eight of in the example of Figure 2, references T1-T8. The generated ultrasound pulse is guided to the ultrasound sensor 32 defined by the processor 30 in its measuring command, for example to the ultrasound sensor T4, in the example of Figure 2 with an eight-channel multiplexer 35. In an advantageous embodiment of the invention, the ultrasound pulse to be sent can be amplified after the multiplexer 35 with an ultrasound sensor-specific output amplifier, which is included in the exemplary amplifier 34 shown in Figure 2. The amplifier 34 can advantageously also comprise separate input amplifiers for each ultrasound sensor, with which the ultrasound pulse reflected from the inner wall of the pipe can be amplified before it is led back into the multiplexer 35. The ultrasound pulse received from the multiplexer 35 is led to the processor 30. The processor 30 determines the wall thickness of the pipe from the time between when the ultrasound pulse is sent and when it is received.

In the example of Figure 2 the processor 30 advantageously stores the measuring result of the wall thickness of the pipe 2A in its memory at least temporarily. In the determining arrangement 1 for the timing of the need to exchange a pipe, the measuring device 3 sends at a set time the measuring results of one or more measuring sensors 32 to the gateway 5, advantageously via a wireless data transfer connection 33, which can for example be a ZigBee^{®} or SmartMesh IP^{™} data transfer connection.

Figure 2 also shows the power source 51 of the gateway, the at least one operating voltage 510 produced by which is utilized by the different subcomponents of the gateway 5 (not shown in Figure 2). The power source 35 of the gateway can be connected to the power grid, but it can also contain an accumulator for ensuring operation during power grid outages.

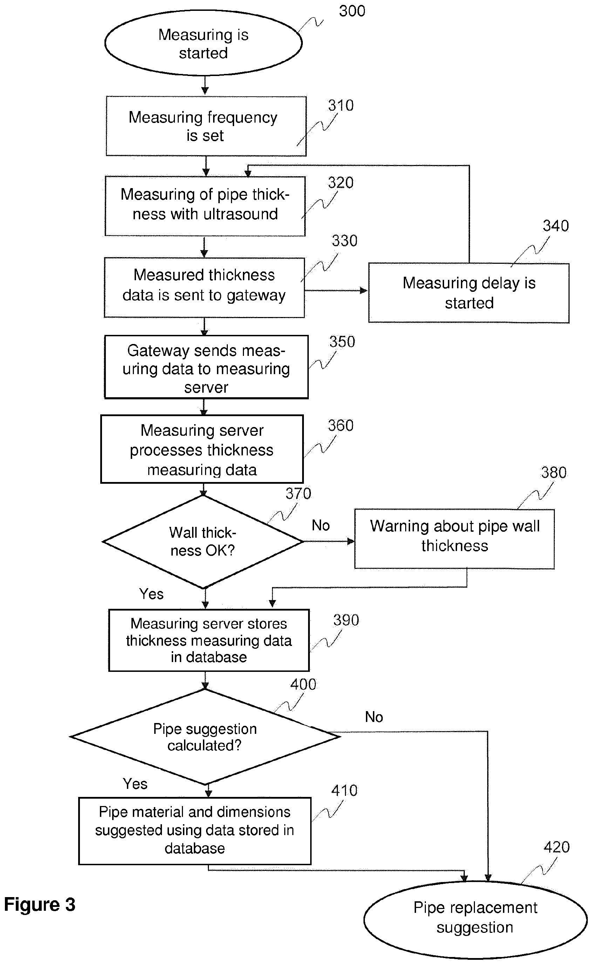

**Figure 3** shows as an exemplary flow chart the main stages of a method utilized in the determining of the need to exchange a pipe in an industrial pipeline according to the invention. In connection with Figure 3, the operational parts of the measuring devices 3 and 4 connected to the pipes 2A and 2B shown in Figure 1 are used to clarify the description of the flow chart of Figure 3.

In step 300 the measuring devices 3, 4 and N and the gateway 9 are advantageously started, which are a part of a determining arrangement 1 for the timing of the need to exchange a pipe utilized in an industrial facility. The starting command can be sent by a measuring server 8 included in the determining arrangement 1 for the timing of the need to exchange a pipe. Alternatively, the starting command is sent by some data processing device able to establish a data transfer connection to the gateway 5. The data processing device can for example be a PC, a laptop computer, a tablet, a smart phone, an electronic device functioning as an administrator for a ZigBee^{®} or SmartMesh IP^{™} network.

In step 310 a starting time for the measuring process and a time interval between two successive measurings is set for each measuring device, for example 3 or 4, of the pipe wall thickness. The used measuring time interval can be of different length for different measuring devices 3 and 4. The measuring time interval for each measuring device 3 and 4 is advantageously stored either in the measuring device 3 or 4 in question, in the gateway 5 and/or in the measuring server 8.

In step 320 for example the measuring device 3 or 4 performs the measuring of the wall thickness of the pipe 2A or 2B with an ultrasound pulse. The measuring device advantageously determines the wall thickness of the pipe 2A or 2B from the time difference, which is measured between the sent ultrasound pulse and the received ultrasound pulse. The measuring device 3 or 4 advantageously stores the measuring result of the wall thickness of the pipe 2A or 2B at least temporarily in its memory.

In step 330 the measuring device 3 or 4 sends the measuring data regarding the wall thickness of the pipe 2A or 2B to the gateway 9. When the measuring result of the pipe wall thickness has been sent, the measuring delay is started in step 340. When the measuring delay of step 340 has passed, a new measuring process of the pipe wall thickness is started in the measuring device 3, 4 or N in step 320. This process loop 320-340 is repeated for so long that the device which is responsible for the administration of the determining arrangement 1 for the timing of a need to exchange a pipe interrupts the measuring process for either pipe 2A or 2B.

In step 350 the gateway 9 sends the measuring result from one or more ultrasound sensors 32 or 42 of at least one measuring device 3 or 4 to the measuring server 8. The measuring result can advantageously be the measuring value of the wall thickness of the pipe 2A or 2B determined by the measuring device 3 or 4. In another advantageous embodiment of the invention the measuring result is the transmission time signal and receipt time signal of the ultrasound pulse of the ultrasound sensor 32 or 42 of the above-mentioned measuring device 3 or 4.

In step 360 the measuring server 8 calculates, if necessary, the wall thickness of the pipe 2A or 2B, if it has received the transmission and receipt time signals of the ultrasound pulse sent by one ultrasound sensor 32 or 42 of only a certain measuring device 3 or 4.

When the wall thickness of the pipe 2A or 2B is either calculated in the measuring server 8 or the measuring server 8 has received the measuring result for the wall thickness of the pipe 2A or 2B in question from a certain measuring device 3 or 4, then at the next stage the measuring server 8 in step 370 compares the measuring result for the wall thickness of the pipe 2A or 2B to the lower limit value of the wall strength of the pipe 2A or 2B in question stored in the database 82.

If the comparison result shows that it falls below the lower limit value in question, the measuring server 8 sends 380 an alarm message related to the wall thickness of the pipe in question, advantageously to a server of the organization responsible for the maintenance of the pipelines. The alarm message advantageously identifies which pipe, 2A or 2B, is in question, and what the measuring result of the last measuring result is. The sent alarm message advantageously includes an indication about within what time the pipe 2A or 2B in question must be exchanged for a new one. After the transmission of the alarm message, the measuring process moves to step 390.

If the comparison result in step 370 does not show that it falls below the lower limit value for the wall thickness of the pipe 2A or 2B in question, the measuring process moves directly to step 390.

In step 390 the measuring server stores the measuring result for the pipe wall thickness of the pipe 2A or 2B received from one ultrasound sensor 32 or 42 of the measuring device 3 or 4 in the database 82.

In step 400 the measuring server 8 advantageously checks if there is a need to determine a replacement pipe for the pipe 2A or 2B referenced in the alarm message.

If the result of the check is that a pipe replacement suggestion is not made, this measuring process of the wall thickness of the individual pipe 2A or 2B ends in step 420.

If the result of the check is that a pipe suggestion is made, the measuring server 8 determines the mechanical dimensions of a replacing new pipe for the pipes 2A or 2B, the pipe material to be used and a deadline for when the replacement pipe must be installed at the latest.

When dimensioning the replacement pipe, the measuring server 8 advantageously also utilizes different technical and chemical variables affecting the wear of the pipe stored in the database 82, such as the pipe material, the current mechanical dimensioning of the pipe, the substance flowing in the pipe, the temperature of the pipe and the pressure prevailing in the pipe. From this data the measuring server 8 makes a suggestion regarding the material of the replacement pipe, its mechanical dimensioning, the measuring intervals of the wall thickness of the replacement pipe and a suggestion regarding the timing of the need to exchange the replacement pipe to be installed. Thereafter the measuring process also ends in step 420.

In neither of the above-described alternatives does the step 420 interrupt the measuring delay 340 of the pipe 2A or 2B started in step 340. Therefore the next measuring of the wall thickness of the same pipe 2A or 2B with the same ultrasound sensor 32 or 42 of the measuring device 3 or 4 is performed after the delay 340 has expired, if no separate command has been given in the determining arrangement 1 for the timing of the need to exchange a pipe to stop the wall thickness measurings of the pipe 2A or 2B in question.

All the above-described process steps 300-420 can be implemented with a computer program product, which is run in a suitable general-purpose or special-purpose processor. The code means implementing the computer program can be stored in some computer-readable media, such as a data disk or a memory, from where the processor of the data processing device can retrieve the computer program commands mentioned in the code means and execute them. The references to computer-readable media can for example also contain special components, such as programmable USB Flash memories, logic arrays (FPLA), application-specific integrated circuits (ASIC) and signal processors (DSP).

Some advantageous embodiments of the determining method for the timing of a need to exchange a pipe, the determining arrangement for the timing of a need to exchange a pipe, the measuring server and the computer program product utilized in the determining method for the timing of a need to exchange a pipe according to the invention are described above. The invention is not limited to the solutions described above, but the inventive idea can be applied in numerous ways within the scope of the claims.

## Claims

1. A method for determining a replacement necessity moment of a pipe of an industrial pipeline, in which method
- a time between successive measurings of a wall thickness of a pipe (2A, 2B) to be measured is determined (310)
- a measuring device (3, 4) for the wall thickness of the pipe (2A, 2B) is started (320) and
- the wall thickness of the pipe (2A, 2B) is measured (320) with the measuring device (3, 4) at determined time intervals,
**characterised in that** in the method
- the measuring device (3, 4) sends (330) a measuring result regarding the wall thickness of the pipe (2A, 2B) to a gateway (5), the sending of which result simultaneously starts (340) a measuring delay, after the expiry of which the measuring device (3, 4) performs the next measuring of the pipe's (2A, 2B) wall thickness
- the gateway sends (350) the measuring result regarding the wall thickness of the pipe (2A, 2B) to a measuring server (8)
- the measuring server (8) receives and stores (360) the measuring result of the pipe (2A, 2B) wall thickness and that
- the measuring server (8) determines (370) if the measuring result of the wall thickness is smaller than a pre-set alarm thickness for the pipe (2A, 2B), and if
- the measuring result of the pipe (2A, 2B) falls below the set alarm thickness, the measuring server (8) sends (380) a notification regarding the replacement necessity of the pipe (2A, 2B) and simultaneously stores the measured wall thickness of the pipe (2A, 2B) in a database (82) and checks (400), if a suggestion for the material and dimensions of a replacement pipe is made in connection with the replacement necessity of the pipe (2A, 2B), or if
- the measuring result of the pipe (2A, 2B) exceeds the set alarm thickness, the measuring server (8) stores the measured wall thickness of the pipe (2A, 2B) in the database (82).

2. The determining method for the replacement necessity moment of a pipe according to claim 1, **characterized in that** the measuring server (8) makes (410) a suggestion (420) regarding the material and dimensions of the replacement pipe using at least one of the following measuring data: the thickness measuring data of the pipe (2A, 2B), the chemical properties of the material flowing in the pipe, the pressure or temperature prevailing in the pipe.

3. The determining method for the replacement necessity moment of a pipe according to claim 1, **characterized in that** the measuring device (3, 4) measures the wall thickness of the pipe (2A, 2B) with an ultrasound sensor (33).

4. The determining method for the replacement necessity moment of a pipe according to claim 3, **characterized in that** the measuring device (3, 4) measures the wall thickness of the pipe (2A, 2B) using at least two ultrasound sensors.

5. A determining arrangement (1) for the replacement necessity moment of a pipe (2A, 2B) of an industrial pipeline, whereby the determining arrangement (1) comprises a measuring server (8) and a measuring device (3, 4) for the wall thickness of a pipe (2A, 2B), which measuring device is arranged to measure the wall thickness of the pipe (2A, 2B) at set time intervals, **characterized in that** the determining arrangement (1) for the replacement necessity moment of the pipe (2A, 2B) also comprises
- a gateway (5), to which the measuring device (3, 4) of the pipe (2A, 2B) wall thickness is arranged to send a measuring result regarding the wall thickness of a pipe (2A, 2B), the sending of which result is simultaneously arranged to start a measuring delay, after the expiry of which the measuring device (3, 4) is arranged to perform the next measuring of the pipe's (2A, 2B) wall thickness
- the gateway is arranged to send the measuring result regarding the wall thickness of the pipe (2A, 2B) to said measuring server (8)
- the measuring server (8) is arranged to receive and store the measuring result of the pipe (2A, 2B) wall thickness and that
- the measuring server (8) is arranged to determine if the measuring result of the pipe (2A, 2B) wall thickness is smaller than a pre-set alarm thickness for the pipe (2A, 2B), and if
- the measuring result of the pipe (2A, 2B) falls below the set alarm thickness, the measuring server (8) is arranged to send (380) a notification regarding the replacement necessity of the pipe (2A, 2B) and simultaneously to store the measured wall thickness of the pipe (2A, 2B) in a database (82) and check, if a suggestion for the material and dimensions of a replacement pipe is made in connection with the replacement necessity of the pipe, or if
- the measuring result of the pipe (2A, 2B) exceeds the set alarm thickness, the measuring server (8) is arranged to store the measured wall thickness of the pipe (2A, 2B) in the database (82).

6. The determining arrangement for the replacement necessity moment of a pipe according to claim 5, **characterized in that** the measuring server (8) is arranged to make a suggestion regarding the material and dimensions of the replacement pipe using at least one of the following measuring data: the wall thickness measuring data of the pipe (2A, 2B), the chemical properties of the material flowing in the pipe, the pressure or temperature prevailing in the pipe.

7. The determining arrangement for the replacement necessity moment of a pipe according to claim 5, **characterized in that** the measuring device (3, 4) is arranged to measure the wall thickness of the pipe (2A, 2B) with an ultrasound sensor (32, 42).

8. The determining arrangement for the replacement necessity moment of a pipe according to claim 7, **characterized in that** the measuring device (3, 4) is arranged to measure the wall thickness of the pipe (2A, 2B) using at least two ultrasound sensors (32, 42).

9. A measuring server (8) for determining the replacement necessity moment of a pipe (2A, 2B) of an industrial pipeline, which server comprises
- means for connecting (71) to a telecommunications network (7)
- means for storing (81) measuring data regarding the wall thickness of a pipe received from the pipe (2A, 2B) in the database (82) for each pipe,
**characterized in that** the measuring server (8) further comprises means for determining if the measuring result of the pipe (2A, 2B) wall thickness is smaller than a pre-set alarm thickness for the pipe (2A, 2B), and if
- the measuring result of the pipe (2A, 2B) falls below the alarm thickness set for the pipe (2A, 2B), the measuring server (8) further comprises means for sending (380) a notification regarding the replacement necessity of the pipe (2A, 2B) and simultaneously storing the measured wall thickness of the pipe (2A, 2B) in a database (82) and checking, if a suggestion for the material and dimensions of a replacement pipe is made in connection with the replacement necessity of the pipe, or if
- the measuring result of the pipe (2A, 2B) exceeds the set alarm thickness, the measuring server (8) comprises means for storing the measured wall thickness of the pipe (2A, 2B) in the database (82).

10. The measuring server according to claim 9, **characterized in that** it further comprises means for making a suggestion regarding the material and dimensions of the replacement pipe using at least one of the following measuring data: the thickness measuring data of the pipe (2A, 2B), the chemical properties of the material flowing in the pipe, the pressure or temperature prevailing in the pipe.

## Patentansprüche

1. Verfahren zur Bestimmung eines Austauschnotwendigkeitsmoments eines Rohres einer Industrierohrleitung, wobei im Verfahren
- eine Zeit zwischen aufeinanderfolgenden Messungen einer Wanddicke eines zu messenden Rohres (2A, 2B) bestimmt wird (310),
- ein Messgerät (3, 4) für die Wanddicke des Rohres (2A, 2B) gestartet wird (320) und
- mit dem Messgerät (3, 4) in bestimmten Zeitabständen die Wandstärke des Rohres (2A, 2B) gemessen (320) wird, **dadurch gekennzeichnet, dass** im Verfahren
- das Messgerät (3, 4) ein Messergebnis über die Wandstärke des Rohres (2A, 2B) an ein Gateway (5) übermittelt (330), dessen Übermittlung gleichzeitig eine Messverzögerung startet (340), nach deren Ablauf das Messgerät (3, 4) die nächste Messung der Wanddicke des Rohres (2A, 2B) durchführt
- das Gateway das Messergebnis bezüglich der Wandstärke des Rohres (2A, 2B) an einen Messserver (8) übermittelt (350)
- der Messserver (8) das Messergebnis der Rohrwanddicke (2A, 2B) empfängt und speichert (360) und dass
- der Messserver (8) bestimmt (370), ob das Messergebnis der Wanddicke kleiner ist als eine voreingestellte Alarmdicke für das Rohr (2A, 2B), und wenn
- das Messergebnis des Rohres (2A, 2B) die eingestellte Alarmdicke unterschreitet, der Messserver (8) eine Benachrichtigung über den Austauschbedarf des Rohres (2A, 2B) sendet (380) und gleichzeitig die gemessenen Wandstärke des Rohres (2A, 2B) in einer Datenbank (82) speichert und prüft (400), ob im Zusammenhang mit der Austauschnotwendigkeit des Rohres (2A, 2B) ein Vorschlag für Material und Abmessungen eines Austauschrohres gemacht wird, oder wenn
- das Messergebnis des Rohres (2A, 2B) die eingestellte Alarmdicke überschreitet, der Messserver (8) die gemessene Wandstärke des Rohres (2A, 2B) in der Datenbank (82) speichert.

2. Verfahren zur Bestimmung des Austauschnotwendigkeitsmoments eines Rohres nach Anspruch 1, **dadurch gekennzeichnet, dass** der Messserver (8) unter Verwendung von mindestens einem der folgenden Messdaten einen Vorschlag (420) bezüglich des Materials und der Abmessungen des Ersatzrohres macht (410): die Dickenmessdaten des Rohres (2A, 2B), die chemischen Eigenschaften des im Rohr fließenden Materials, der Druck oder die Temperatur, der oder die im Rohr herrscht.

3. Verfahren zur Bestimmung des Austauschnotwendigkeitsmoments eines Rohres nach Anspruch 1, **dadurch gekennzeichnet, dass** das Messgerät (3, 4) die Wandstärke des Rohres (2A, 2B) mit einem Ultraschallsensor (33) misst.

4. Verfahren zur Bestimmung des Austauschnotwendigkeitsmoments eines Rohres nach Anspruch 3, **dadurch gekennzeichnet, dass** das Messgerät (3, 4) die Wandstärke des Rohres (2A, 2B) mit mindestens zwei Ultraschallsensoren misst.

5. Bestimmungsanordnung (1) für den Austauschnotwendigkeitsmoment eines Rohres (2A, 2B) einer Industrierohrleitung, wobei die Bestimmungsanordnung (1) einen Messserver (8) und ein Messgerät (3, 4) für die Wanddicke eines Rohres (2A, 2B) umfasst, wobei das Messgerät dazu eingerichtet ist, die Wanddicke des Rohres (2A, 2B) in festgelegten Zeitintervallen zu messen,
**dadurch gekennzeichnet, dass** die Bestimmungsanordnung (1) für den Austauschnotwendigkeitsmoment des Rohres (2A, 2B) auch Folgendes umfasst:
- ein Gateway (5), an das das Messgerät (3, 4) der Wanddicke des Rohres (2A, 2B) angeordnet ist, um ein Messergebnis bezüglich der Wandstärke eines Rohres (2A, 2B) zu übertragen, wobei das Übertragen des Ergebnisses gleichzeitig eingerichtet ist, um eine Messverzögerung zu starten, nach deren Ablauf das Messgerät (3, 4) eingerichtet ist, die nächste Messung der Wanddicke des Rohres (2A, 2B) durchzuführen
- das Gateway eingerichtet ist, das Messergebnis bezüglich der Wandstärke des Rohres (2A, 2B) an den Messserver (8) zu übertragen
- der Messserver (8) dazu eingerichtet ist, das Messergebnis der Wandstärke des Rohres (2A, 2B) zu empfangen und zu speichern und dass
- der Messserver (8) eingerichtet ist, zu bestimmen, ob das Messergebnis der Wandstärke des Rohres (2A, 2B) kleiner als eine voreingestellte Alarmstärke für das Rohr (2A, 2B) ist, und wenn
- das Messergebnis des Rohres (2A, 2B) die eingestellte Alarmdicke unterschreitet, der Messserver (8) eingerichtet ist, eine Benachrichtigung über die Notwendigkeit des Austauschs des Rohres (2A, 2B) zu übertragen (380) und gleichzeitig die gemessene Wandstärke des Rohres (2A, 2B) in einer Datenbank (82) zu speichern und zu prüfen, ob im Zusammenhang mit der Austauschnotwendigkeit des Rohres ein Vorschlag für Material und Abmessungen eines Austauschrohrs gemacht wird, oder wenn
- das Messergebnis des Rohres (2A, 2B) die eingestellte Alarmdicke überschreitet, der Messserver (8) eingerichtet ist, die gemessene Wanddicke des Rohres (2A, 2B) in der Datenbank (82) zu speichern.

6. Bestimmungsanordnung für den Austauschnotwendigkeitsmoment eines Rohres nach Anspruch 5, **dadurch gekennzeichnet, dass** der Messserver (8) eingerichtet ist, einen Vorschlag bezüglich des Materials und der Abmessungen des Austauschrohrs unter Verwendung von mindestens einer der folgenden Messdaten zu machen: die Wanddickenmessdaten des Rohres (2A, 2B), die chemischen Eigenschaften des im Rohr fließenden Materials, der Druck oder die Temperatur, der oder die im Rohr herrscht.

7. Bestimmungsanordnung für den Austauschnotwendigkeitsmoment eines Rohres nach Anspruch 5, **dadurch gekennzeichnet, dass** das Messgerät (3, 4) dazu eingerichtet ist, die Wandstärke des Rohres (2A, 2B) mit einem Ultraschallsensor (32, 42) zu messen.

8. Bestimmungsanordnung für den Austauschnotwendigkeitsmoment eines Rohres nach Anspruch 7, **dadurch gekennzeichnet, dass** das Messgerät (3, 4) dazu eingerichtet ist, die Wandstärke des Rohres (2A, 2B) unter Verwendung von mindestens zwei Ultraschallsensoren (32, 42) zu messen.

9. Messserver (8) zum Ermitteln des Austauschnotwendigkeitsmoments eines Rohres (2A, 2B) einer Industrierohrleitung, wobei der Server Folgendes umfasst:
- Mittel zur Verbindung (71) mit einem Telekommunikationsnetz (7)
- Mittel zum Speichern (81) von vom Rohr (2A, 2B) empfangenen Messdaten bezüglich der Wanddicke eines Rohres in der Datenbank (82) für jedes Rohr,
**dadurch gekennzeichnet, dass** der Messserver (8) ferner Mittel umfasst, um zu bestimmen, ob das Messergebnis der Wandstärke des Rohres (2A, 2B) kleiner als eine voreingestellte Alarmstärke für das Rohr (2A, 2B) ist, und wenn
- das Messergebnis des Rohres (2A, 2B) unter die für das Rohr (2A, 2B) eingestellte Alarmdicke fällt, der Messserver (8) ferner Mittel zum Senden (380) einer Benachrichtigung bezüglich der Austauschnotwendigkeit des Rohres (2A, 2B) und zum gleichzeitigen Speichern der gemessenen Wandstärke des Rohres (2A, 2B) in einer Datenbank (82) und zur Prüfung umfasst, ob ein Vorschlag für Material und Abmessungen eines Austauschrohrs im Zusammenhang mit der Austauschnotwendigkeit des Rohres gemacht wird, oder wenn
- das Messergebnis des Rohres (2A, 2B) die eingestellte Alarmdicke überschreitet, der Messserver (8) Mittel zum Speichern der gemessenen Wanddicke des Rohres (2A, 2B) in der Datenbank (82) umfasst.

10. Messserver nach Anspruch 9, **dadurch gekennzeichnet, dass** er weiterhin Mittel umfasst, um anhand mindestens einer der folgenden Messdaten einen Vorschlag bezüglich des Materials und der Abmessungen des Austauschrohrs zu machen: die Dickenmessdaten des Rohres (2A, 2B), die chemischen Eigenschaften des im Rohr fließenden Materials, der Druck oder die Temperatur, der oder die im Rohr herrscht.

## Revendications

1. Procédé pour déterminer un moment de nécessité de remplacement d'un tuyau d'un pipeline industriel, procédé dans lequel
- un temps entre des mesures successives d'une épaisseur de paroi d'un tuyau (2A, 2B) à mesurer est déterminé (310)
- un dispositif de mesure (3, 4) pour l'épaisseur de paroi du tuyau (2A, 2B) est démarré (320) et
- l'épaisseur de paroi du tuyau (2A, 2B) est mesurée (320) avec le dispositif de mesure (3, 4) à des intervalles de temps déterminés,
**caractérisé en ce que**, dans le procédé,
- le dispositif de mesure (3, 4) envoie (330) un résultat de mesure concernant l'épaisseur de paroi du tuyau (2A, 2B) vers une passerelle (5), résultat dont l'envoi démarre simultanément (340) une temporisation de mesure, après l'expiration de laquelle le dispositif de mesure (3, 4) effectue la mesure suivante de l'épaisseur de paroi du tuyau (2A, 2B)
- la passerelle envoie (350) le résultat de mesure concernant l'épaisseur de paroi du tuyau (2A, 2B) à un serveur de mesure (8)
- le serveur de mesure (8) reçoit et stocke (360) le résultat de mesure de l'épaisseur de paroi du tuyau (2A, 2B) et **en ce que**
- le serveur de mesure (8) détermine (370) si le résultat de mesure de l'épaisseur de paroi est inférieur à une épaisseur d'alarme prédéfinie pour le tuyau (2A, 2B), et si
- le résultat de mesure du tuyau (2A, 2B) tombe en dessous de l'épaisseur d'alarme définie, le serveur de mesure (8) envoie (380) une notification concernant la nécessité de remplacement du tuyau (2A, 2B) et stocke simultanément l'épaisseur de paroi mesurée du tuyau (2A, 2B) dans une base de données (82) et vérifie (400), si une suggestion pour le matériau et les dimensions d'un tuyau de remplacement est effectuée en rapport avec la nécessité de remplacement du tuyau (2A, 2B), ou si
- le résultat de mesure du tuyau (2A, 2B) dépasse l'épaisseur d'alarme définie, le serveur de mesure (8) stocke l'épaisseur de paroi mesurée du tuyau (2A, 2B) dans la base de données (82).

2. Procédé de détermination du moment de nécessité de remplacement d'un tuyau selon la revendication 1, **caractérisé en ce que** le serveur de mesure (8) effectue (410) une suggestion (420) concernant le matériau et les dimensions du tuyau de remplacement à l'aide d'au moins l'une des données de mesure suivantes : les données de mesure d'épaisseur du tuyau (2A, 2B), les propriétés chimiques du matériau s'écoulant dans le tuyau, la pression ou la température présentes dans le tuyau.

3. Procédé de détermination du moment de nécessité de remplacement d'un tuyau selon la revendication 1, **caractérisé en ce que** le dispositif de mesure (3, 4) mesure l'épaisseur de paroi du tuyau (2A, 2B) avec un capteur à ultrasons (33).

4. Procédé de détermination du moment de nécessité de remplacement d'un tuyau selon la revendication 3, **caractérisé en ce que** le dispositif de mesure (3, 4) mesure l'épaisseur de paroi du tuyau (2A, 2B) à l'aide d'au moins deux capteurs à ultrasons.

5. Système de détermination (1) pour le moment de nécessité de remplacement d'un tuyau (2A, 2B) d'un pipeline industriel, moyennant quoi le système de détermination (1) comprend un serveur de mesure (8) et un dispositif de mesure (3, 4) pour l'épaisseur de paroi d'un tuyau (2A, 2B), lequel dispositif de mesure est agencé pour mesurer l'épaisseur de paroi du tuyau (2A, 2B) à des intervalles de temps définis,
**caractérisé en ce que** le système de détermination (1) pour le moment de nécessité de remplacement du tuyau (2A, 2B) comprend également
- une passerelle (5), à laquelle le dispositif de mesure (3, 4) de l'épaisseur de paroi du tuyau (2A, 2B) est agencé pour envoyer un résultat de mesure concernant l'épaisseur de paroi d'un tuyau (2A, 2B), résultat dont l'envoi est simultanément agencé pour démarrer une temporisation de mesure, après l'expiration de laquelle le dispositif de mesure (3, 4) est conçu pour effectuer la mesure suivante de l'épaisseur de paroi du tuyau (2A, 2B)
- la passerelle est agencée pour envoyer le résultat de mesure concernant l'épaisseur de paroi du tuyau (2A, 2B) audit serveur de mesure (8)
- le serveur de mesure (8) est agencé pour recevoir et stocker le résultat de mesure de l'épaisseur de paroi du tuyau (2A, 2B) et **en ce que**
- le serveur de mesure (8) est agencé pour déterminer si le résultat de mesure de l'épaisseur de paroi du tuyau (2A, 2B) est inférieur à une épaisseur d'alarme prédéfinie pour le tuyau (2A, 2B), et si
- le résultat de mesure du tuyau (2A, 2B) tombe en dessous de l'épaisseur d'alarme définie, le serveur de mesure (8) est agencé pour envoyer (380) une notification concernant la nécessité de remplacement du tuyau (2A, 2B) et simultanément pour stocker l'épaisseur de paroi mesurée du tuyau (2A, 2B) dans une base de données (82) et vérifier, si une suggestion pour le matériau et les dimensions d'un tuyau de remplacement est effectué en rapport avec la nécessité de remplacement du tuyau, ou si
- le résultat de mesure du tuyau (2A, 2B) dépasse l'épaisseur d'alarme définie, le serveur de mesure (8) est agencé pour stocker l'épaisseur de paroi mesurée du tuyau (2A, 2B) dans une base de données (82).

6. Système de détermination du moment de nécessité de remplacement d'un tuyau selon la revendication 5, **caractérisé en ce que** le serveur de mesure (8) est agencé pour effectuer une suggestion concernant le matériau et les dimensions du tuyau de remplacement à l'aide d'au moins l'une des données de mesure suivantes : les données de mesure d'épaisseur de paroi du tuyau (2A, 2B), les propriétés chimiques du matériau s'écoulant dans le tuyau, la pression ou la température présentes dans le tuyau.

7. Système de détermination du moment de nécessité de remplacement d'un tuyau selon la revendication 5, **caractérisé en ce que** le dispositif de mesure (3, 4) est agencé pour mesurer l'épaisseur de paroi du tuyau (2A, 2B) avec un capteur à ultrasons (32, 42).

8. Système de détermination du moment de nécessité de remplacement d'un tuyau selon la revendication 7, **caractérisé en ce que** le dispositif de mesure (3, 4) est agencé pour mesurer l'épaisseur de paroi du tuyau (2A, 2B) à l'aide d'au moins deux capteurs à ultrasons (32, 42) .

9. Serveur de mesure (8) pour déterminer le moment de nécessité de remplacement d'un tuyau (2A, 2B) d'un pipeline industriel, lequel serveur comprend
- des moyens de connexion (71) à un réseau de télécommunications (7)
- des moyens pour stocker (81) des données de mesure concernant l'épaisseur de paroi d'un tuyau reçues du tuyau (2A, 2B) dans la base de données (82) pour chaque tuyau,
**caractérisé en ce que** le serveur de mesure (8) comprend en outre des moyens pour déterminer si le résultat de mesure de l'épaisseur de paroi du tuyau (2A, 2B) est inférieur à une épaisseur d'alarme prédéfinie pour le tuyau (2A, 2B), et si
- le résultat de mesure du tuyau (2A, 2B) tombe en dessous de l'épaisseur d'alarme définie pour le tuyau (2A, 2B), le serveur de mesure (8) comprend en outre des moyens pour envoyer (380) une notification concernant la nécessité de remplacement du tuyau (2A, 2B) et mémoriser simultanément l'épaisseur de paroi mesurée du tuyau (2A, 2B) dans une base de données (82) et vérifier, si une suggestion pour le matériau et les dimensions d'un tuyau de remplacement est effectuée en rapport avec la nécessité de remplacement du tuyau, ou si
- le résultat de mesure du tuyau (2A, 2B) dépasse l'épaisseur d'alarme définie, le serveur de mesure (8) comprend des moyens pour stocker l'épaisseur de paroi mesurée du tuyau (2A, 2B) dans la base de données (82).

10. Serveur de mesure selon la revendication 9, **caractérisé en ce qu'**il comprend en outre des moyens pour effectuer une suggestion concernant le matériau et les dimensions du tuyau de remplacement à l'aide d'au moins l'une des données de mesure suivantes : les données de mesure d'épaisseur du tuyau (2A, 2B), les propriétés chimiques du matériau s'écoulant dans le tuyau, la pression ou la température présentes dans le tuyau.
